# EUROPÄISCHE PATENTSCHRIFT

(11) **EP 3 624 955 B1**
(45) Veröffentlichungstag und Bekanntmachung des Hinweises auf die Patenterteilung: **02.08.2023**
(21) Anmeldenummer: 17725495.0
(22) Anmeldetag: 16.05.2017
(51) Int. Cl.: B63B 59/06, B63C 5/02

(54) **EINSCHIENENSYSTEM**
MONORAIL SYSTEM
SYSTÈME MONORAIL

(43) Veröffentlichungstag der Anmeldung: 25.03.2020
(73) Patentinhaber: ABC IP Holding GmbH, 8712 Niklasdorf (AT)
(72) Erfinder: PALFINGER, Hubert, 5023 Salzburg (AT)
(74) Vertreter: Babeluk, Michael
(86) Internationale Anmeldenummer: PCT/AT2017/060130
(87) Internationale Veröffentlichungsnummer: WO 2018/209367

(56) Entgegenhaltungen:
- EP-A1- 2 651 754
- EP-B1- 2 370 312
- CN-A- 104 264 538
- JP-A- 2002 021 321

## Beschreibung

Die Erfindung betrifft ein modular zusammenbaubares Einschienensystem mit einer Vielzahl von Schienensegmenten, wobei zumindest zwei Kurvenschienensegmente vorgesehen sind, die über ein konvex ausgebildetes Schienenendstück sowie ein konkav ausgebildetes Schienenendstück verfügen, wobei im zusammengebauten Zustand zumindest ein konvex ausgebildetes Schienenendstück eines ersten Kurvenschienensegments mit einem konkav ausgebildeten Schienenendstück eines benachbarten zweiten Kurvenschienensegments in gelenkiger Verbindung steht, dessen Verwendung zum Verfahren von Instandhaltungsvorrichtungen zur Bearbeitung von im Wesentlichen senkrecht verlaufenden Flächen, insbesondere Schiffsrümpfe, sowie ein Instandhaltungssystem bestehend aus zumindest einer Instandhaltungsvorrichtung sowie dem erfindungsgemäßen Einschienensystem.

Es ist in vielen Bereichen der Technik erforderlich, die Oberfläche von großflächigen Bauflächen, insbesondere aus Stahl zu untersuchen sowie zu bearbeiten. Beispielsweise muss der Rumpf von Schiffen in bestimmten Abständen gegen Korrosion geschützt werden. Dazu werden alte schadhafte Anstriche in speziellen Verfahren abgetragen, um danach die gereinigten Stahloberflächen des Schiffsrumpfes mit einem neuen Anstrich versehen zu können. Dieses Verfahren wird als "Recoating" bezeichnet.

In Schiffsdocks werden üblicherweise Instandhaltungseinrichtungen eingesetzt, mit deren Hilfe Schiffshüllen und/oder Schiffsaufbauten gereinigt, entlackt und/ oder neu beschichtet werden. Diese Instandhaltungseinrichtungen sind entweder als starr montierte großflächige Aufbauten ausgeführt oder aber als kleinere mobile Einheiten, die entlang der zu bearbeitenden Fläche, beispielsweise Schiffshülle, bewegt werden. Eine derartige Instandhaltungseinrichtung kann beispielsweise der EP 2 370 312 B1 der Anmelderin entnommen werden. Diese Vorrichtungen sind hierbei üblicherweise entweder auf einem Motorfahrzeug, beispielsweise Lastkraftwagen montiert oder aber auf einem Schienensystem wie beispielsweise in der EP 2 651 754 A1 gezeigt angeordnet.

Schienensysteme sind zumeist starr, also formschlüssig auf dem Dock montiert oder innerhalb eines Gleisbetts angeordnet, sodass die Instandhaltungseinrichtung Unterschiede im Abstand zwischen Schienensystem und zu bearbeitende Fläche ausgleichen muss. Da jedoch Größe und/oder Form der Schiffe variieren, und des Weiteren insbesondere im Bug- und Heckbereich des Schiffs ein zunehmender Abstand zwischen Instandhaltungsvorrichtung und Schiffshülle entsteht, muss die Instandhaltungseinrichtung bei derartigen Schienensystemen gemäß dem Stand der Technik diesen Abstand ausgleichen. Derartige Schienensysteme sind somit äußerst unflexibel.

In der CN 104 264 538 A ist ein Schienensystem bestehend aus einer Vielzahl von Schienenkörper beschrieben, wobei diese Schienenkörper gelenkig miteinander in Verbindung stehen. Diese Schienenkörper erlauben zwar eine flexiblere Verlegung der Schienen, sind jedoch kompliziert in ihrem Aufbau und sind in einem ersten Schienenstrang erst durch die Anordnung von Querstreben zu einem zweiten Schienenstrang in ihrer gekrümmten Position zueinander fixiert. Ebenso ist dieses System nicht für die freie Verlegung ohne Verbindung mit dem Untergrund geeignet.

Es ist daher Aufgabe der Erfindung, die Nachteile des Stand der Technik zu beseitigen und ein Schienensystem der eingangs erwähnten Art bereitzustellen, das auf einfache Weise montiert und an unterschiedliche Schiffstypen angepasst werden kann.

Diese Aufgabe wird erfindungsgemäß durch ein Einschienensystem der eingangs erwähnten Art dadurch gelöst, dass an jedem Kurvenschienensegment Stellschrauben, und zwar vorzugsweise zwei Stellschrauben zur Einstellung der Krümmung eines Streckenabschnitts, der im Wesentlichen aus Kurvenschienensegmenten zusammengesetzt ist, vorgesehen sind, die mit einem auf dem benachbarten Kurvenschienensegment angeordneten Anschlag zusammenwirken.

Ein derartig modular aufgebautes Schienensystem mit nur einem Schienenstrang, auf dem zumindest eine Instandhaltungsvorrichtung verfahrbar ist, lässt sich besonders rasch und flexibel aufbauen und an die jeweilige Schiffsform anpassen, weil die einzelnen Kurvenschienensegmente über die gelenkige Verbindung zueinander verschwenkbar sind und damit ein jeweils passender gekrümmter Verlauf des Schienenstrangs eingestellt werden kann. Zur Einstellung der Krümmung oder des Kurvenbereichs eines Streckenabschnitts des erfindungsgemäßen Einschienensystems ist vorgesehen, dass an jedem Kurvenschienensegment vorzugsweise zwei Stellschrauben vorgesehen sind, die mit einem auf dem benachbarten Kurvenschienensegmenten angeordneten Anschlag zusammenwirken. Damit werden zur Vereinfachung der Montage des Einschienensystems zunächst die einzelnen Kurvenschienensegmente zusammengefügt und auf dem Untergrund angeordnet anschließend zueinander über die gelenkige Verbindung verschwenkt, um die gewünschte Kurvenform des Streckenabschnitts zu erzielen.

In einer bevorzugten Ausführung der Erfindung greift das zumindest eine konvex ausgebildetes Schienenendstück des ersten Kurvenschienensegments in das konkav ausgebildete Schienenendstück des benachbarten zweiten Kurvenschienensegments ein, wobei ein Passbolzen die beiden Kurvenschienensegmente zueinander verschwenkbar miteinander verbindet. Das Zusammenfügen der im Wesentlichen passgenauen Schienenendstücke der einzelnen Kurvenschienensegmente sowie die Verwendung eines Passbolzens zur Verbindung derselben erlaubt einen besonders raschen Zusammenbau des erfindungsgemäßen Einschienensystems.

Ein wesentlicher Vorteil dieses Einschienensystems liegt darin, dass es aufgrund seines modularen Aufbaus flexibel praktisch an jeden beliebigen Streckenverlauf angepasst werden kann. Des Weiteren ist keine kraftschlüssige Fixierung der einzelnen Schienensegmente mit dem Untergrund vorgesehen, die Positionierung der Schienensegmente erfolgt ausschließlich über Kraft-/Reibschluss, der durch das Verfahren von auf dem Einschienensystem angeordneten Vorrichtungen, insbesondere Instandhaltungsvorrichtungen erzielt wird. In einer weiteren bevorzugten Ausführung der Erfindung ist daher vorgesehen, dass zusätzliche Ballastelemente, vorzugsweise Betonplatten, an zumindest einem, vorzugsweise an zwei benachbarten Schienensegmenten anordenbar sind, um diesen Reibschluss weiter zu verbessern. Insbesondere auch an den Endbereichen des Einschienensystems, das üblicherweise nicht als ein in sich geschlossener Schienenstrang ausgeführt ist, sind solche Ballastelemente von Vorteil, um im Betrieb ein Abheben und/oder Verrücken der im Endbereich befindlichen Schienensegmente zu verhindern.

In einer Variante der vorliegenden Erfindung ist zusätzlich zumindest ein Weichenelement vorgesehen, das ein Rangieren der auf dem Einschienensystem befindlichen Instandhaltungsvorrichtung(en) erlaubt.

Vorteilhafterweise verfügt das zumindest eine Weichenelement über zwei Weichenzungen, die im Wesentlichen parallel zueinander verschwenkbar sind und damit ein rasches Umleiten von auf dem Einschienensystem befindlichen Vorrichtungen erlauben.

Das erfindungsgemäße Einschienensystems wird überwiegend im Freien, beispielsweise auf Schiffsdocks verlegt. Damit ist es den Umweltbedingungen wie Temperaturschwankungen und Sonneneinstrahlung ausgesetzt. Dies hat zur Folge, dass sich die Schienensegmente ausdehnen und wieder schrumpfen, was bei der Verwendung von Schienensegmenten aus Stahl zu erheblichen Längenänderungen führen kann. Diese Längenänderungen können wiederum zu Verwerfungen in dem Streckenverlauf des Einschienensystems führen. Daher ist bevorzugterweise zusätzlich zumindest ein Längenausgleichselement vorgesehen, um diese temperaturbedingten Längenänderungen zu kompensieren.

Hierbei weist besonders bevorzugt das zumindest eine Längenausgleichelement zwei über einen vorzugsweise schräg zur Längsachse des Längenausgleichelements verlaufenden Spalt voneinander getrennte Laufflächenelemente auf, die zueinander beweglich auf einem Basiselement angeordnet sind. Über diesen sich verändernden Spalt können die Längenänderungen aufgefangen werden.

Das erfindungsgemäße Einschienensystems hat sich insbesondere zum Verfahren von Instandhaltungsvorrichtungen zur Bearbeitung von im Wesentlichen senkrecht verlaufenden Flächen, insbesondere Schiffsrümpfe als geeignet erwiesen. Es erlaubt, wie bereits zuvor beschrieben, eine individuelle und anpassbare Streckenführung des Einschienensystems, um zumindest eine darauf verfahrbare Instandhaltungsvorrichtung in eine optimale Position zu der zu bearbeitenden Oberfläche, beispielsweise einem Schiffsrumpf zu bringen. Durch die ausschließliche Fixierung des Einschienensystems mittels Kraft-/Reibschluss auf dem Untergrund ist eine besonders rasche und flexible Montage bzw. Demontage des Einschienensystems möglich.

Die Aufgabe wird des Weiteren durch ein Instandhaltungssystem bestehend aus zumindest einer Instandhaltungsvorrichtung sowie dem erfindungsgemäßen Einschienensystem in vorteilhafter Weise gelöst, wobei sich das Instandhaltungssystem sich insbesondere durch rasche Montage, anpassbare Streckenführung und einfache und zuverlässige Bedienung auszeichnet.

Im Folgenden wird anhand von nicht-einschränkenden Ausführungsbeispielen mit zugehörigen Figuren die Erfindung näher erläutert. Darin zeigen:
- Fig. 1: eine schematische Ansicht des erfindungsgemäßen Einschienen-systems mit darauf verfahrbaren Instandhaltungsvorrichtungen;
- Fig. 2: einen Ausschnitt des Einschienensystems aus Fig. 1;
- Fig. 3: eine erste Detailansicht des Einschienensystems aus Fig. 1 auf die geradlinigen Schienensegmente;
- Fig. 4A: eine zweite Detailansicht des Einschienensystems aus Fig. 1 auf die Kurvenschienensegmente;
- Fig. 4B: eine Detailansicht auf die Kurvenschienensegmente aus Fig. 4A;
- Fig. 5A: eine Draufsicht auf ein Weichenelement in einer ersten Position;
- Fig. 5B: eine Draufsicht auf das Weichenelement aus Fig. 5A in einer zweiten Position;
- Fig. 6A: eine Draufsicht auf ein Längenausgleichselement; und
- Fig. 6B: eine Schnittansicht auf das Längenausgleichselement aus Fig. 6A.

Das erfindungsgemäße Einschienensystem 100 wird in einer bevorzugten Ausführung der Erfindung zum Verfahren von Instandhaltungsvorrichtungen 200 eingesetzt, wobei diese Instandhaltungsvorrichtungen 200 beispielsweise für die Bearbeitung von Schiffsrümpfen 1000 vorgesehen sind.

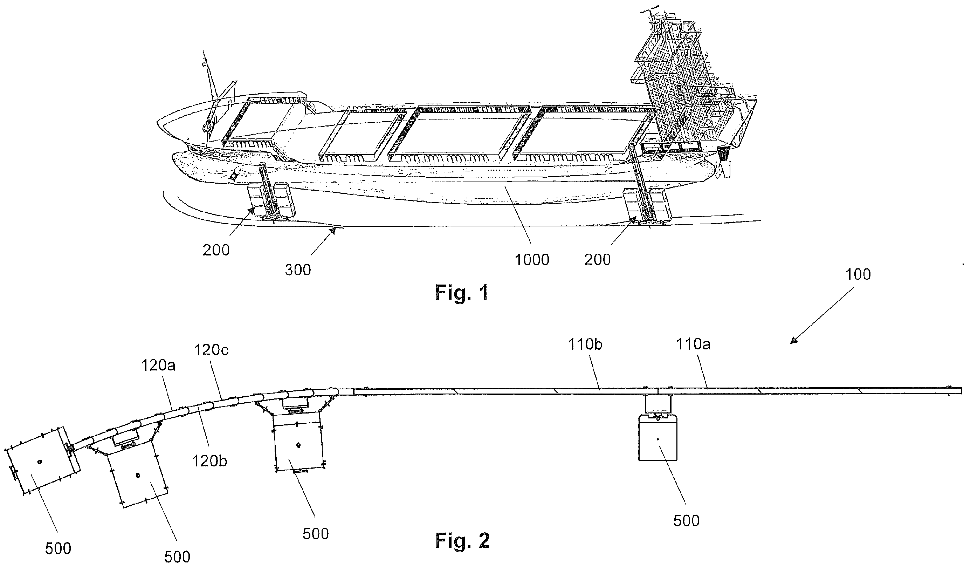

Wie in der Fig. 1 gezeigt, verläuft das Einschienensystem 100 entlang des Schiffsrumpfs 1000 und ist beispielsweise zusätzlich mit Weichen 300 versehen, um die entsprechenden Instandhaltungsvorrichtungen 200 je nach Bedarf rangieren zu können. Das erfindungsgemäße Einschienensystem 100 wird hierbei ohne zusätzliche Fixierung einfach auf dem Untergrund, im vorliegenden Fall auf dem Schiffsdock verlegt.

Aus der Fig. 2 ist ersichtlich, dass das erfindungsgemäße Einschienensystem 100 aus einer Vielzahl von Schienensegmenten 110a, 110b, 120a, 120b, 120c zusammengesetzt ist. Das Einschienensystem 100 wird hierbei allein durch Reibschluss in seiner Position auf dem Untergrund gehalten, wobei insbesondere das Gewicht der auf dem Einschienensystem 100 verfahrbaren Instandhaltungsvorrichtungen 200 dieses auf den oft unebenen Untergrund anpresst.

Zusätzlich wird dieser Reibschluss durch Ballastelemente 500, bevorzugterweise in Form von Betonplatten, die an einem, vorzugsweise zwei benachbarten Schienensegmenten 110a, 110b, 120a, 120b abnehmbar befestigt sind, unterstützt. Diese Ballastelemente 500 können zudem mit an ihrer Auflagefläche angeordneten Antirutschmatten ausgestattet sein.

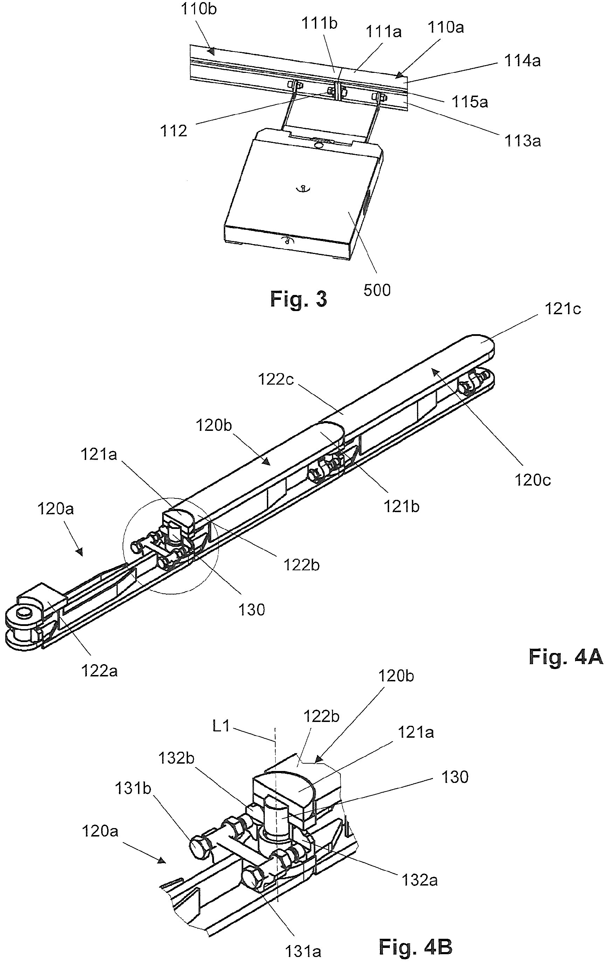

Für die Verlegung von im Wesentlichen geraden Streckenabschnitten sind langgestreckte Schienensegmente 110a, 110b vorgesehen, die mit ihren gerade ausgeführten Enden 111a, 111b bündig aneinandergelegt und mittels Fixierschrauben 112 miteinander verschraubt werden (Fig. 3). Diese langgestreckten Schienensegmente 110a, 110b weisen hierbei einen im Wesentlichen I-förmigen Querschnitt mit einem auf dem Untergrund ruhenden Untergurt 113a, einem vorzugsweise mit einer Verschleißschicht versehenen Obergurt 114a sowie einem normal zu Untergurt 113a und Obergurt 114a verlaufenden Steg 115a auf.

Für die Verlegung von gekrümmten Streckenabschnitten sind erfindungsgemäß Kurvenschienensegmente 120a, 120b, 120c vorgesehen. Diese Kurvenschienensegmente 120a, 120b, 120c weisen jeweils ein konvex ausgebildetes Schienenendstück 121a, 121b, 121c auf, das in ein konkav ausgebildetes Schienenendstück 122b, 122c eines benachbarten Kurvensegments 120a, 120b eingreift.

Gemäß Fig. 4A und Fig. 4B, in denen zur Veranschaulichung der gelenkigen Verbindung zwischen benachbarten Kurvenschienensegmenten der Obergurt des ersten Kurvenschienensegments 120a nur teilweise dargestellt wurde, ist ein Passbolzen 130 vorgesehen, der die Schienenendstücke 121a, 122b zueinander verschwenkbar miteinander verbindet. Zur Einstellung und Fixierung der Krümmung des Streckenabschnittes werden die gelenkig miteinander verbundenen Kurvenschienensegmente 120a, 120b, 120c zueinander über die Längsachse L1 des Passbolzens 130 verdreht und mittels Stellschrauben 131a, 131b in ihrer Position zueinander fixiert. Die Stellschrauben 131a, 131b des ersten Kurvenschienensegments 120a wirken hierzu mit jeweils einem Anschlag 132a, 132b an dem benachbarten zweiten Kurvenschienensegment 120b zusammen.

Berühren beide Stellschrauben 131a, 132b den jeweiligen Anschlag 132a, 132b, so sind die beiden benachbarten Kurvenschienensegmente 120a, 120b geradlinig zueinander ausgerichtet wie in Fig. 4B gezeigt, ihre jeweiligen Längsachsen liegen somit auf einer gemeinsamen Geraden. Sind die beiden benachbarten Kurvenschienensegmente 120a, 120b verschwenkt zueinander angeordnet, so schneiden sich ihre jeweiligen Längsachsen unter einem vorgebbaren Winkel, wobei eine erste Stellschraube 131a ihren Anschlag 132a berührt, während eine zweite Stellschraube 131b beabstandet von ihrem Anschlag 132b ist.

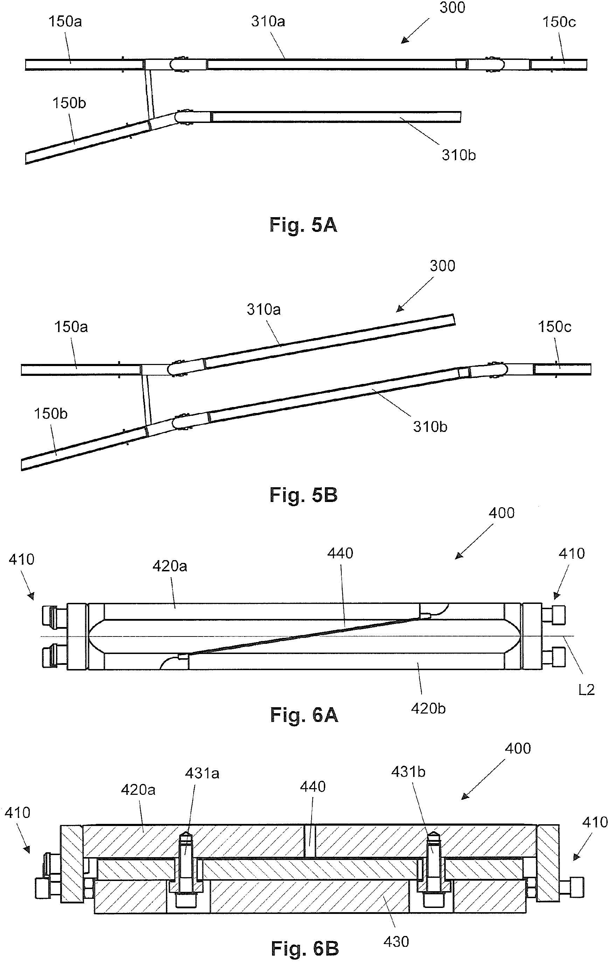

Des Weiteren verfügt das erfindungsgemäße Einschienensystem 100 über Weichenelemente 300, wie in den Figs. 5A und 5B gezeigt. Das erfindungsgemäße Weichenelement 300 verfügt über zwei verschwenkbare Weichenzungen 310a, 310b, die jeweils mit einem Schienenstreckenabschnitt 150a, 150b in gelenkiger Verbindung stehen. Durch im Wesentlichen paralleles Verschwenken der beiden Weichenzungen 310a, 310b entweder der erste Schienenstreckenabschnitt 150a mit einem dritten Schienenstreckenabschnitt 150c (Fig. 5A) oder aber der zweite Streckenabschnitt 150b mit dem dritten Schienenstreckenabschnitt 150c (Fig. 5B) in Verbindung und kann entsprechend von der Instandhaltungsvorrichtung 200 befahren werden (Fig. 1).

Das erfindungsgemäße Einschienensystem 100 ist üblicherweise im Freien, beispielsweise auf Schiffsdocks angeordnet und damit den Außentemperaturen und zumindest teilweise der Sonnenstrahlung ausgesetzt. Diese oftmals hohen Temperaturen bewirken eine Längenausdehnung des Einschienensystems 100, die gegebenenfalls zu einer Aufwölbung und/oder Verschiebung des Einschienensystems 100 führen kann. Dies stellt jedoch eine erhebliche Gefahr für den Betrieb der Instandhaltungsvorrichtungen 200 dar.

Daher sind in dieser Ausführung der Erfindung zusätzliche Längenausgleichselemente 400 vorgesehen (Figs. 6A und 6B), die vorzugsweise in regelmäßigen Abständen, üblicherweise in den geradlinig verlaufenden Streckenabschnitten, zwischen den Schienensegmenten 110a, 110b angeordnet sind.

Das Längenausgleichselement 400 ist hierbei über Schienenanschlusselemente 410 mit den benachbarten Schienensegmenten110a, 110b starr verbunden. Es besteht aus zwei Laufflächenelementen 420a, 420b, die mit einem Basiselement 430, das im montierten Zustand auf dem Untergrund aufliegt, jeweils über eine Schraubverbindung 431a, 431b verbunden sind. Diese Schraubverbindungen 431a, 431b sind unbeweglich mit den Laufflächenelementen 420a, 420b verschraubt, jedoch innerhalb des Basiselements 430 parallel zur Längsachse L2 des Längenausgleichselements 400 beweglich. Die beiden Lauf flächenelemente 420a, 420b sind hierbei über einen Spalt 440 zueinander beabstandet angeordnet. Verändert sich nun beispielsweise aufgrund von Sonneneinstrahlung die Längserstreckung der Schienensegmente des Einschienensystems, so verändert sich auch der Abstand der Laufflächenelemente 420a, 420b zueinander und der Spalt 440 reduziert sich damit. Da die Veränderung der Längenerstreckung der Schienensegmente aufgrund von Temperaturschwankungen durchaus signifikant sein kann, ist in dieser Ausführung des erfindungsgemäßen Längenausgleichselements 400 vorgesehen, dass der Spalt 440 schräg zur Längsachse L2 des Längenausgleichselements 400 verläuft, um ein störungsfreies Verfahren eines auf den Laufflächenelementen 420a, 420b befindliches Laufrad der Instandhaltungsvorrichtung 200 zu gewährleisten.

Um das erfindungsgemäße Einschienensystem 100 auf einem Untergrund beispielsweise einem Schiffsdock zu verlegen, ist bevorzugterweise vorgesehen, dass in einem ersten Schritt die einzelnen Schienensegmente (110a, 110b, 120a, 120b, 120c) sowie gegebenenfalls Weichenelemente 300 und Längenausgleichselemente 400 miteinander verbunden werden. Die Kurvenschienensegmente 120a, 120b, 120c werden hierbei zunächst in einer geraden Linie zusammengefügt, um dann anschließend durch Verstellen der entsprechenden Stellschrauben 131a, 131b in der oben beschriebenen Weise einen beispielsweise mittels auf dem Untergrund befindlichen Bodenmarkierungen vorgegebenen gekrümmten Verlauf dieses Streckenabschnitts zu erhalten.

In einem letzten Schritt werden gegebenenfalls Ballastelemente 500 an besonders anfälligen Stellen an Schienensegmenten angebracht, um den Reibschluss des Einschienensystems 100 mit dem Untergrund in den entsprechenden Bereichen zu verbessern. Dies ist insbesondere an den Enden 160 des Einschienensystems 100 notwendig, um ein Abheben dieser Enden 160 bei Befahren des Einschienensystems 100 mit den tonnenschweren Instandhaltungsvorrichtungen 200 zu verhindern. Tatsächlich erfolgt die Fixierung des Einschienensystems 100 auf dem Untergrund praktisch ausschließlich durch den durch das Gewicht der Instandhaltungsvorrichtungen 200 erzielten Reibschluss.

Ein wesentlicher Vorteil des erfindungsgemäßen Einschienensystems 100 liegt in dessen reib- bzw. kraftschlüssiger Positionierung auf dem Untergrund, ohne das zusätzliche formschlüssige Maßnahmen wie beispielsweise Schraub- oder Bolzenverbindungen mit dem Untergrund oder aufwendige Vorbereitungen des Untergrunds wie beispielsweise ein Gleisbett notwendig sind. Dies erlaubt eine rasche Montage bzw. Demontage des erfindungsgemäßen Einschienensystems 100 an Ort und Stelle, sowie gegebenenfalls eine rasche und einfache Verlegung des Einschienensystems an eine andere Stelle Anpassung des Schienenverlaufs bei Bedarf.

## Patentansprüche

1. Modular zusammenbaubares Einschienensystem (100) mit einer Vielzahl von Schienensegmenten (110a, 110b, 120a, 120b, 120c), wobei zumindest zwei Kurvenschienensegmente (120a, 120b, 120c) vorgesehen sind, die über ein konvex ausgebildetes Schienenendstück (121a, 121b, 121c) sowie ein konkav ausgebildetes Schienenendstück (122a, 122b, 122c) verfügen, wobei im zusammengebauten Zustand zumindest ein konvex ausgebildetes Schienenendstück (121a, 121b, 121c) eines ersten Kurvenschienensegments (120a, 120b, 120c) mit einem konkav ausgebildeten Schienenendstück (122a, 122b, 122c) eines benachbarten zweiten Kurvenschienensegments (120a, 120b, 120c) in gelenkiger Verbindung steht, **dadurch gekennzeichnet, dass** an jedem Kurvenschienensegment (120a, 120b, 120c) Stellschrauben (131a, 131b), und zwar vorzugsweise zwei Stellschrauben (131a, 131b) zur Einstellung der Krümmung eines Streckenabschnitts, der im Wesentlichen aus Kurvenschienensegmenten (120a, 120b, 120c) zusammengesetzt ist, vorgesehen sind, die mit einem auf dem benachbarten Kurvenschienensegment (120a, 120b, 120c) angeordneten Anschlag (132a, 132b) zusammenwirken.

2. Einschienensystem (100) nach Anspruch 1, **dadurch gekennzeichnet, dass** das zumindest eine konvex ausgebildetes Schienenendstück (121a, 121b, 121c) des ersten Kurvenschienensegments (120a, 120b, 120c) in das konkav ausgebildete Schienenendstück (122a, 122b, 122c) des benachbarten zweiten Kurvenschienensegments (120a, 120b, 120c) eingreift, wobei ein Passbolzen (130) die beiden Kurvenschienensegmente (120a, 120b, 120c) zueinander verschwenkbar miteinander verbindet.

3. Einschienensystem (100) nach Anspruch 1 oder 2, **dadurch gekennzeichnet, dass** zusätzliche Ballastelemente (500), vorzugsweise Betonplatten, an zumindest einem, vorzugsweise an zwei benachbarten Schienensegmenten (110a, 110b, 120a, 120b, 120c) anordenbar sind.

4. Einschienensystem (100) nach einem der Ansprüche 1 bis 3, **dadurch gekennzeichnet, dass** zusätzlich zumindest ein Weichenelement (300) vorgesehen ist.

5. Einschienensystem (100) nach Anspruch 4, **dadurch gekennzeichnet, dass** das zumindest eine Weichenelement (300) über zwei Weichenzungen (310a, 310b) verfügt, die im Wesentlichen parallel zueinander verschwenkbar sind.

6. Einschienensystem (100) nach einem der Ansprüche 1 bis 5, **dadurch gekennzeichnet, dass** zusätzlich zumindest ein Längenausgleichselement (400) vorgesehen ist.

7. Einschienensystem (100) nach Anspruch 6, **dadurch gekennzeichnet, dass** das zumindest eine Längenausgleichelement (400) zwei über einen vorzugsweise schräg zur Längsachse (L2) des Längenausgleichelements (400) verlaufenden Spalt (440) voneinander getrennte Laufflächenelemente (420a, 420b) aufweist, die zueinander beweglich auf einem Basiselement (410) angeordnet sind.

8. Verwendung eines Einschienensystems (100) nach einem der Ansprüche 1 bis 7 zum Verfahren von zumindest einer Instandhaltungsvorrichtung (200) zur Bearbeitung von im Wesentlichen senkrecht verlaufenden Flächen, beispielsweise Schiffsrümpfe (1000).

9. Verwendung nach Anspruch 8, **dadurch gekennzeichnet, dass** die Fixierung des Einschienensystems (100) auf dem Untergrund, beispielsweise einem Schiffsdock ausschließlich mittels Reibschluss erfolgt.

10. Instandhaltungssystem bestehend aus zumindest einer Instandhaltungsvorrichtung (200) sowie einem Einschienensystem (100) nach einem der Ansprüche 1 bis 9, auf dem die zumindest eine Instandhaltungsvorrichtung (200) verfahrbar ist.

11. Instandhaltungssystem nach Anspruch 10, **dadurch gekennzeichnet, dass** die Fixierung des Einschienensystems (100) auf dem Untergrund, beispielsweise einem Schiffsdock ausschließlich mittels Reibschluss erfolgt.

## Claims

1. Monorail system (100) which can be assembled in a modular manner and comprises a plurality of rail segments (110a, 110b, 120a, 120b, 120c), wherein at least two rail curve segments (120a, 120b, 120c) are provided, which comprise a convexly formed rail end piece (121a, 121b, 121c) and a concavely formed rail end piece (122a, 122b, 122c), wherein in the assembled state at least one convexly formed rail end piece (121a, 121b, 121c) of a first rail curve segment (120a, 120b, 120c) is in articulated connection with a concavely formed rail end piece (122a, 122b, 122c) of an adjacent second rail curve segment (120a, 120b, 120c), **characterised in that** set screws (131a, 131b), and preferably two set screws (131a, 131b), are provided on each rail curve segment (120a, 120b, 120c) for adjusting the curvature of a track section which is substantially composed of rail curve segments (120a, 120b, 120c), which cooperate with a stop (132a, 132b) arranged on the adjacent rail curve segment (120a, 120b, 120c).

2. Monorail system (100) according to claim 1, **characterised in that** the at least one convexly formed rail end piece (121a, 121b, 121c) of the first rail curve segment (120a, 120b, 120c) engages in the concavely formed rail end piece (122a, 122b, 122c) of the adjacent second rail curve segment (120a, 120b, 120c), wherein a fitting bolt (130) connects the two rail curve segments (120a, 120b, 120c) to one another so as to be pivotable relative to one another.

3. Monorail system (100) according to claim 1 or 2, **characterised in that** additional ballast elements (500), preferably concrete slabs, can be arranged on at least one, preferably two adjacent rail segments (110a, 110b, 120a, 120b, 120c).

4. Monorail system (100) according to one of claims 1 to 3, **characterised in that** at least one switch element (300) is additionally provided.

5. Monorail system (100) according to claim 4, **characterised in that** the at least one switch element (300) has two switch tongues (310a, 310b) which can be pivoted substantially parallel to one another.

6. Monorail system (100) according to one of claims 1 to 5, **characterised in that** at least one length compensation element (400) is additionally provided.

7. Monorail system (100) according to claim 6, **characterised in that** the at least one length compensation element (400) has two running surface elements (420a, 420b) which are separated from one another by a gap (440) preferably extending obliquely to the longitudinal axis (L2) of the length compensation element (400) and which are arranged movably relative to one another on a base element (410).

8. Use of a monorail system (100) according to one of claims 1 to 7 for displacing at least one maintenance device (200) for machining substantially vertically extending surfaces, for example ship hulls (1000).

9. Use according to claim 8, **characterised in that** the monorail system (100) is fixed to the base, for example a ship dock, exclusively by means of frictional engagement.

10. Maintenance system consisting of at least one maintenance device (200) and a monorail system (100) according to one of claims 1 to 9, on which the at least one maintenance device (200) is displaceable.

11. Maintenance system according to claim 10, **characterised in that** the monorail system (100) is fixed to the base, for example a ship dock, exclusively by means of frictional engagement.

## Revendications

1. Système de monorail (100) de construction modulaire comportant un ensemble de segments de rails (110a, 110b, 120a, 120b, 120c), avec au moins deux segments de rails courbes (120a, 120b, 120c) ayant un embout de rail convexe (121a, 121b, 121c) et un embout de rail concave (122a, 122b, 122c), et à l'état assemblé, au moins un embout de rail convexe (121a, 121b, 121c) d'un premier segment de rail courbe (120a, 120b, 120c) est relié par une liaison articulée à un embout de rail concave (122a, 122b, 122c) d'un second segment de rail courbe (120a, 120b, 120c) voisins,
système **caractérisé en ce que**
chaque segment de rail courbe (120a, 120b, 120c) comporte des vis de réglage (131a, 131b) et de préférence deux vis de réglage (131a, 131b) pour régler la courbure d'un segment de voie composé principalement de segments de rail courbe (120a, 120b, 120c), qui coopèrent avec une butée (132a, 132b) prévue sur le segment de rail courbe (120a, 120b, 120c) voisin.

2. Système de monorail (100) selon la revendication 1,
**caractérisé en ce que**
au moins un embout de rail convexe (121a, 121b, 121c) du premier segment de rail courbe (120a, 120b, 120c) est engagé dans l'embout de rail concave (122a, 122b, 122c) du second segment de rail courbe (120a, 120b, 120c) voisin, un goujon adaptateur (130) reliant entre eux de manière pivotante les deux segments de rail courbe (120a, 120b, 120c).

3. Système de monorail (100) selon la revendication 1 ou 2,
**caractérisé en ce que**
des éléments de ballast (500) supplémentaires, de préférence des plaques en béton sont associés à au moins un, et de préférence, deux segments de rail (110a, 110b, 120a, 120b, 120c) voisins.

4. Système de monorail (100) selon l'une des revendications 1 à 3,
**caractérisé en ce que**
en plus il est prévu au moins un élément d'aiguillage (300).

5. Système de monorail (100) selon la revendication 4,
**caractérisé en ce que**
le segment d'aiguillage (300) comporte deux lames d'aiguille (310a, 310b) qui sont pivotantes de manière pratiquement parallèle.

6. Système de monorail (100) selon l'une des revendications 1 à 5,
**caractérisé en ce que**
en plus il comporte au moins un élément compensateur de longueur (400).

7. Système de monorail (100) selon la revendication 6,
**caractérisé en ce que**
au moins un élément compensateur de longueur (400) comporte deux éléments de surface de circulation (420a, 420b) séparés l'un de l'autre par un intervalle (440) de préférence incliné par rapport à l'axe longitudinal (L2) de l'élément compensateur de longueur (400), les éléments de surface de roulement étant montés mobiles l'un par rapport à l'autre sur un élément de base (410).

8. Application d'un système monorail (100) selon l'une des revendications 1 à 7 pour la circulation d'au moins un dispositif d'entretien (200) pour travailler sur des surfaces principalement verticales, par exemple, des coques de navire (1000).

9. Application selon la revendication 8,
**caractérisée en ce que**
la fixation du système monorail (100) sur l'infrastructure, par exemple un dock maritime, se fait exclusivement par une liaison par frottement.

10. Système d'entretien composé d'au moins un dispositif d'entretien (200) ainsi que d'un système monorail (100) selon l'une des revendications 1 à 9, sur lequel se déplace au moins un dispositif d'entretien (200).

11. Système d'entretien selon la revendication 10,
**caractérisé en ce que**
la fixation du système monorail (100) sur l'infrastructure, par exemple, un dock maritime se fait exclusivement par une liaison par frottement.
